# EUROPÄISCHE PATENTSCHRIFT

(11) **EP 1 107 029 B1**
(45) Veröffentlichungstag und Bekanntmachung des Hinweises auf die Patenterteilung: **23.01.2008**
(21) Anmeldenummer: 00811056.1
(22) Anmeldetag: 09.11.2000
(51) Int. Cl.: G02B 6/27, G02B 6/10

(54) **Verfahren zur Herstellung eines faseroptischen Wellenleiters für einen Sensor**
Method of fabrication of an optical fibre waveguide for a sensor
Méthode de fabrication de guides d'onde optiques comprenant des fibres optiques pour un capteur

(30) Priorität: 06.12.1999 DE 19958600
(43) Veröffentlichungstag der Anmeldung: 13.06.2001
(73) Patentinhaber: ABB RESEARCH LTD., 8050 Zürich (CH)
(72) Erfinder: Bohnert, Klaus, Dr., 5452 Oberrohrdorf (CH); Brändle, Hubert, Dr., 8102 Oberengstringen (CH); Gabus, Philippe, 5413 Birmenstorf (CH)
(74) Vertreter: ABB Patent Attorneys

(56) Entgegenhaltungen:
- WO-A-00/48008
- WO-A-98/58268
- US-A- 4 529 262
- US-A- 4 603 941

## Beschreibung

### Technisches Gebiet

Die Erfindung bezieht sich auf ein Verfahren zur Herstellung eines faseroptischen Wellenleiters und einen faseroptischen Wellenleiter mit einem Grundsegment und einem Phasenverschiebungssegment gemäss Oberbegriff der Patentansprüche 1 und 13.

### Stand der Technik

Ein gattungsgemässer faseroptischer Wellenleiter mit einem Grundsegment und einem Phasenverschiebungssegment ist beispielsweise aus EP-A-0'856'737 bekannt, wo er in einem magnetooptischen Stromsensor eingesetzt ist. Dieser Wellenleiter weist zwei polarisationserhaltende Grundfasern mit elliptischen Kernen, Zuleitungsfaser und Rückleitungsfaser genannt, auf sowie eine zwischen diesen zwei Fasern angeordnete spulenförmig um einen elektrischen Leiter gewickelte Sensorfaser mit einem runden Kern. Als Übergangsglieder zwischen Grundfasern und Sensorfaser ist je ein Phasenverschiebungselement in Form eines faseroptischen λ/4-Verzögerungsgliedes vorhanden, dessen ebenfalls elliptischer Kern um 45° gegenüber dem Kern der Grundfasern gedreht ist. Linear polarisierte Wellen, welche sich in der Zuleitungsfaser ausbreiten, werden beim Übergang in das Verzögerungsglied in zwei orthogonale Polarisationskomponenten zerlegt, die parallel zu den Hauptachsen des Kerns des Verzögerungsglieds ausgerichtet sind. Die Länge des λ/4-Verzögerungsgliedes ist dabei so gewählt, dass die beiden Polarisationskomponenten an seinem Ende aufgrund der Doppelbrechung einen optischen Phasenunterschied von 90° aufweisen. Das aus dem Verzögerungsglied austretende Licht ist dann zirkular polarisiert. Somit lassen sich durch ein erstes Verzögerungsglied aus linear polarisierten Wellen der Zuleitungsfaser zirkular polarisierte Wellen erzeugen, welche sich in der Sensorfaser ausbreiten können, und durch ein zweites Verzögerungsglied wieder in linear polarisierte Wellen zurückverwandeln, deren Polarisation parallel zu einer Hauptachse des elliptischen Kerns der Rückleitungsfaser liegt, so dass sie sich in dieser auszubreiten können.

Die Herstellung eines derartigen faseroptischen Wellenleiters erfordert einiges Geschick. Gemäss dem Stand der Technik werden hierfür zuerst die elliptischen Kerne der Grundfaser und des Verzögerungsgliedes um 45° gegeneinander orientiert ausgerichtet. Die Ausrichtung erfolgt mittels Polarisatoren und ist in der Regel sehr zeitaufwendig. Danach wird je ein Faserende der Grundfaser und des Verzögerungsgliedes miteinander verbunden, wobei dies in der Regel mittels Lichtbogenschweissen, auch Spleissen genannt, erfolgt.

Zwar sind Spleissgeräte bekannt, welche die Winkelorientierung von Faserkernen durch seitliches Durchstrahlen der Fasern automatisch bestimmen. Diese Methode liefert gute Resultate für Fasern mit stress-induzierter Doppelbrechung. Sie ist jedoch unzureichend für die oben beschriebenen Fasern, deren Doppelbrechung auf einem elliptischen Kern beruht. Dies trifft insbesondere bei Fasern zu, welche für kleine Wellenlängen von maximal 850 nm ausgelegt sind, da die elliptischen Faserkerne sehr klein sind und das Spleissgerät ihre Orientierung nicht mit ausreichender Genauigkeit erkennen kann.

Die Erfindung nimmt Bezug auf die WO 98/58268. Dort wird ein faseroptischer interferometrischer Stromsensor mit tordierter Sensorfaser offenbart, der eingangsseitig und ausgangsseitig über Spleisse mit einem Lambda-Viertel Phasenverschiebungssegment verbunden ist, welches seinerseits am anderen Ende über einen 45°-Spleiss mit einer polarisationserhaltenden Zuleitungsfaser verbunden ist.

In dem U. S. Pat. No. 4,603,941 wird vorgeschlagen, eine polarisationserhaltende Faser um 45° zu verdrehen, lokal aufzuschmelzen und durch die mechanische Entspannung in der Aufschmelzzone eine Kopplungszone zu schaffen, in welcher die Faserkerne um 45° zueinander verdreht sind.

In dem U. S. Pat. No. 4,529,262 wird ein faseroptischer Attenuator offenbart, der aus einem doppelbrechenden Phasenmodulator in Form einer doppelbrechenden Faser und einem nachfolgenden Faserpolarisator besteht. Die Doppelbrechung in der doppelbrechenden Faser kann durch Zug, Druck oder lokale Erwärmung reversibel auf einen gewünschten Wert eingestellt werden oder aber als Mass für eine zu messende Zugkraft, Druckkraft oder lokale Erwärmung gemessen werden. In jedem Fall wird die Doppelbrechung in der doppelbrechenden Faser reversibel verändert.

### Darstellung der Erfindung

Es ist deshalb Aufgabe der Erfindung, ein Verfahren zur Herstellung eines faseroptischen Wellenleiters der eingangs genannten Art sowie einen Wellenleiter zu schaffen, welche eine einfache Herstellung auch für Fasern mit elliptischen Kernen ermöglichen.

Diese Aufgabe löst ein Verfahren mit den Merkmalen des Patentanspruches 1 sowie ein Wellenleiter mit den Merkmalen des Patentanspruches 13.

Im erfindungsgemässen Verfahren wird eine optische Faser um einen definierten Winkel tordiert und eine Zone der Faser erwärmt, bis sich die Torsion in dieser Zone löst, so dass angrenzend an diese Zone auf einer Seite ein Grundsegment und auf der anderen Seite ein Phasenverschiebungssegment beziehungsweise ein Segment mit einer Ausrichtung entsprechend dem zu erzielenden Phasenverschiebungssegment entsteht.

Eine komplizierte Ausrichtung von zwei Fasern erübrigt sich, da sie durch eine einfache Torsion um eine optische Achse beziehungsweise Längsachse einer Faser ersetzt ist. Durch lokales Erwärmen des Fasermaterials löst sich die Torsion. Es entsteht innerhalb der Faser eine Entspannungszone, welche die Faser in zwei Segmente unterteilt, deren Faserkerne um den Torsionswinkel gegeneinander ausgerichtet sind.

Dabei lässt sich im erfindungsgemässen Verfahren eine Feinkorrektur des Polarisationszustandes beziehungsweise des Phasenverschiebungssegmentes erreichen, indem die Doppelbrechung des Phasenverschiebungssegmentes durch Erwärmung eingestellt wird.

Dadurch lässt sich ein faseroptischer Wellenleiter schaffen, welcher in einer einstückigen optischen Faser sowohl ein Grundsegment wie auch ein Phasenverschiebungssegment aufweist, wobei Grundsegment und Phasenverschiebungssegment Kerne aufweisen, welche um einen definierten Winkel zueinander ausgerichtet sind, und wobei die zwei Segmente durch die erwärmte und wieder erstarrte Entspannungszone voneinander getrennt sind. Die Kerne des Grundsegments und des Verschiebungssegments weisen dabei dieselbe Form, nämlich diejenige des Kerns der optischen Faser, auf.

In einer ersten Variante des Verfahrens ist die optische Faser mit einer zweiten optischen Faser verbunden, wobei beide Fasern miteinander tordiert werden. Die Entspannungszone wird dabei so gewählt, dass sie in einem definierten Abstand zu einer Verbindungsstelle der zwei Fasern liegt.

In einer anderen Variante des Verfahrens wird lediglich die optische Faser tordiert, wobei die Lage der Entspannungszone beliebig gewählt wird. Erst nach Erstarrung dieser Zone wird die optische Faser in einem definierten Abstand dazu gebrochen, um ein Phasenverschiebungssegment in seiner benötigten Länge zu bilden. An diese Bruchstelle lässt sich anschliessend eine zweite Faser, insbesondere mit unterschiedlichem Kern, anspleissen.

Weitere vorteilhafte Ausführungsformen gehen aus den abhängigen Patentansprüchen hervor.

### Kurze Beschreibung der Zeichnungen

Im folgenden werden das erfindungsgemässe Verfahren und der Erfindungsgegenstand anhand von bevorzugten Ausführungsbeispielen, welche in den beiliegenden Zeichnungen dargestellt sind, näher erläutert. Es zeigen:
- Figuren 1a bis 1c: einen faseroptischen Wellenleiter während seiner Herstellung gemäss einer ersten Variante des erfindungsgemässen Verfahrens,
- Figur 1d: die Faserkerne der einzelnen Segmente des erfindungsgemässen Wellenleiters gemäss Figur 1c,
- Figuren 2a bis 2c: einen faseroptischen Wellenleiter, hergestellt gemäss einer zweiten Variante der Erfindung und
- Figur 2d: die Faserkerne des Wellenleiters gemäss Figur 2c.

### Wege zur Ausführung der Erfindung

Anhand der Figuren la bis ld wird im folgenden das erfindungsgemässe Verfahren zur Herstellung eines faseroptischen Wellenleiters erläutert.

Zwei Fasern 1,2 werden in Halterungen 5,6 eines Faserspleissgerätes gespannt. Das Spleissgerät ist bis auf zwei Elektroden 7 nicht weiter dargestellt. In dem hier dargestellten Beispiel werden zwei Fasern 1,2 mit unterschiedlichen Kernen verwendet, wobei die im Bild links dargestellte erste Faser 1 einen elliptischen Kern K zur Ausbreitung von linear polarisierten Lichtwellen aufweist und die rechts dargestellte zweite Faser 2 einen runden Kern K' zur Ausbreitung von zirkular polarisierten Lichtwellen aufweist. Die Polarisationen P sind in der Figur la mit Pfeilen dargestellt. Die Kerne K,K' sind in Figur ld ersichtlich.

Dient die Faser zur Verwendung in einem magnetooptischen Sensor der eingangs genannten Art, so bildet die erste Faser 1 eine Grundfaser und die zweite Faser 2 eine Sensorfaser.

Die zwei Fasern 1,2 werden mittels des Spleissgerätes in einem elektrischen Lichtbogen aneinandergefügt, so dass eine Verbindungsstelle 3 entsteht. Dieser Vorgang erfordert lediglich eine axiale Ausrichtung der Fasern, aber keine Winkelorientierung der Achsen des Kerns K. Es entsteht ein Faserverbund, welcher einen zwischen zwei Halterungen 5,6 eingespannten Abschnitt 4 aufweist, wobei der Abschnitt 4 die Verbindungsstelle 3 beinhaltet. Die Länge d des Abschnittes 4 beträgt typischerweise 5-15 cm. Dieser optische Faserverbund ist in Figur la dargestellt.

In einer Untervariante des Verfahrens wird ein bereits vorher zusammengefügter Faserverbund in das Spleissgerät oder ein anderes für das weitere Verfahren geeignete Gerät eingespannt.

Mindestens eine der beiden Halterungen 5,6 ist als Drehhalterung ausgeführt, mit welcher der eingespannte Abschnitt 4 um eine optische Achse beziehungsweise Längsachse des Faserverbundes rotierbar ist. In diesem Beispiel ist dies die zweite Halterung 6, welche die zweite Faser 2 umschliesst. Der Abschnitt 4 beziehungsweise der Faserverbund wird nun um mindestens annähernd einem vordefinierten Winkel α tordiert und in dieser Torsionslage fixiert gehalten. Dient die Faser zur Verwendung in einem magnetooptischen Sensor der eingangs genannten Art, so ist der Winkel α mindestens annähernd, vorzugsweise genau 45°.

Der eingespannte Abschnitt 4 wird nun lokal erwärmt, vorzugsweise mittels des Lichtbogens des Spleissgerätes. Hierfür werden die Halterungen 5,6 mit der eingespannten Faser um eine definierte Strecke in Längsrichtung des Faserverbundes bewegt, so dass die Elektroden 7 auf die erste Faser 1, die Grundfaser, zeigen. Die Verschiebungsstrecke beziehungsweise der Abstand L zur Spleissstelle 3 hängt von der Art des zu erzielenden Phasenverschiebungssegmentes 12 ab, da diese Strecke die Länge des resultierenden Phasenverschiebungssegments 12 bildet. Generell beträgt die Länge mindestens ein Vielfaches eines Bruchteils einer Schwebungslänge von orthogonalen Polarisationsmoden der ersten Faser 1. Soll, wie hier dargestellt, ein λ/4-Verzögerungsglied geschaffen werden, so beträgt der Abstand 1 mindestens annähernd ein Viertel der Schwebungslänge, bei einem λ/2 oder λ/8-Verzögerungsglied beträgt sie die Hälfte beziehungweise einen Achtel davon. Bei einer Wellenlänge von 800 nm beträgt die Schwebungslänge bei kommerziell erhältlichen Fasern mit elliptischen Kern circa 4 mm. Das Längenverhältnis der beiden Hauptachsen des elliptischen Kerns beträgt dabei 2:1. Durch Wahl des Abstandes L lässt sich somit jeder beliebige Polarisationszustand zwischen linearer und zirkularer Polarisation erhalten.

Die lokale Erwärmung führt zur Bildung einer Entspannungszone 13 innerhalb der ersten Faser, deren Länge vorzugsweise 10-90 µm beträgt. Diese Entspannungszone 13 wird solange erwärmt, bis sich in ihr die Torsion löst. Dabei wird die Faser vorzugsweise erweicht, jedoch nicht geschmolzen. Durch das Lösen der Torsion dreht sich die Faser teilweise, so dass der Faserkern auf einer Seite der Entspannungszone 13 um den Torsionswinkel α gegenüber dem Faserkern der anderen Seite gedreht ist. Die Entspannungszone 13 wird aktiv oder passiv zur Erstarrung gebracht, wobei die Fixierung der Torsionslage bis zum Erstarren der Entspannungszone 13 aufrechterhalten wird. Bei den üblicherweise verwendeten Materialien erstarrt die Zone innerhalb von wenigen Sekunden nach Erlöschen des Lichtbogens von selbst.

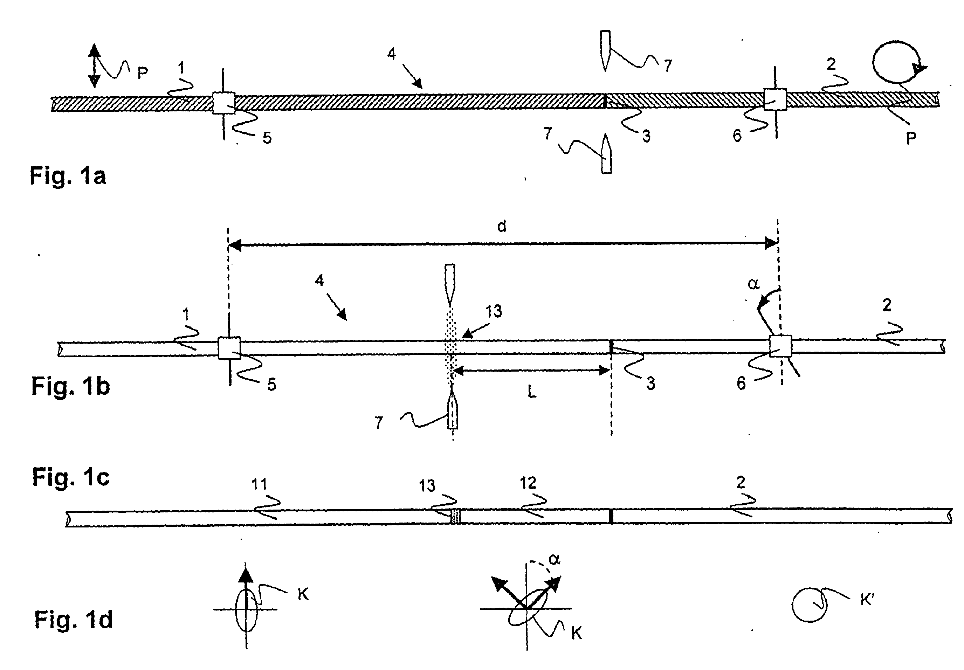

Diese relative Orientierung bleibt nach dem Erstarren der Entspannungszone 13 und nach dem Lösen der Halterungen 5,6 permanent erhalten. Wie in Figur 1c ersichtlich, wird somit ein faseroptischer Wellenleiter erhalten, welcher links der Entspannungszone 13 ein Grundsegment 11 und rechts ein Phasenverschiebungssegment 12 aufweist, wobei beide Segmente aus einer einstückigen optischen Faser, nämlich der ersten Faser 1 gebildet worden sind. Dabei weisen sie jedoch, wie in Figur ld dargestellt ist, Kerne K derselben Form, jedoch mit unterschiedlichen Orientierungen auf.

Die Entspannungszone 13 dieses erfindungsgemässen faseroptischen Wellenleiters weist einen Kern auf, welcher nicht mehr exakt elliptisch ist und sich somit von den Kernen K des Grundsegmentes 11 beziehungsweise Phasenverschiebungssegmentes 12 unterscheidet. Dies hängt unter anderem mit der Diffusion der Dotierungen des Kerns, in der Regel Germanium-Atome, beim Aufheizen der Entspannungszone 13 zusammen.

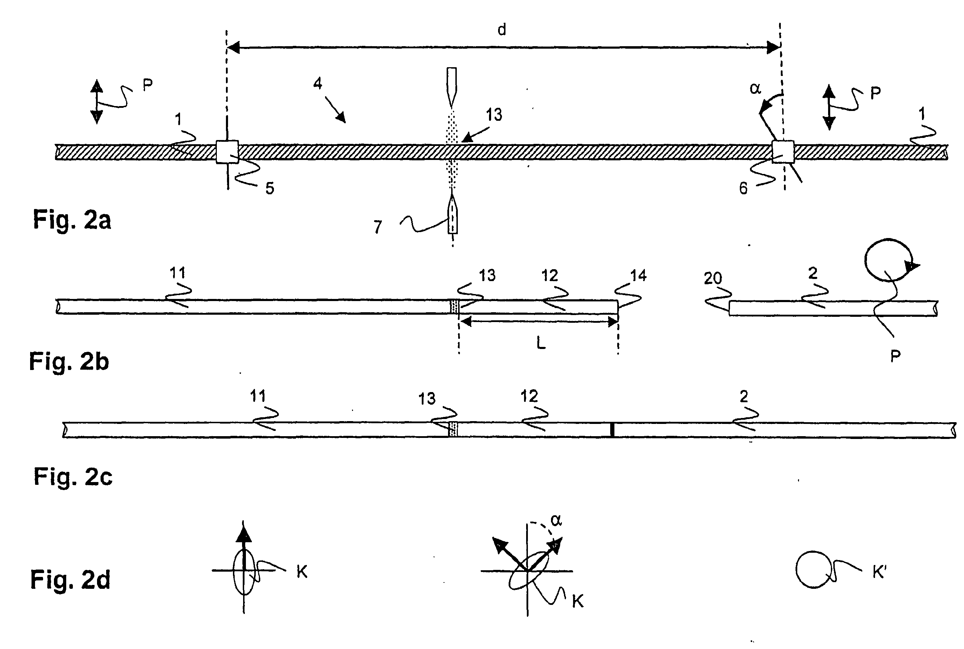

In den Figuren 2a bis 2c ist eine zweite Variante des erfindungsgemässen Verfahrens dargestellt. In dieser Variante wird nur die optische Faser 1 zwischen zwei Halterungen 5,6 des Spleissgeräts eingespannt, um den definierten Torsionswinkel α bezüglich der Faserlängsachse gedreht und anschliessend an einer beliebigen Stelle des eingespannten Abschnittes 4 mittels des Lichtbogens erwärmt, so dass wiederum die Entspannungszone 13 entsteht, in welcher die Torsion gelöst wird, wie dies in Figur 2a dargestellt ist. Auch hier entstehen rechts und links von der Entspannungszone 13 Segmente mit unterschiedlich gerichteten Kernen. Nach Erstarren der Entspannungszone 13 werden die Halterungen 5,6 gelöst und die optische Faser 1 wird an einer Stelle, welche in einem definierten Abstand L von der Entspannungszone 13 entfernt ist, gebrochen, wie aus Figur 2b ersichtlich ist. Der Abstand entspricht wiederum der Länge L des zu erzielenden Phasenverschiebungssegmentes 12 und hängt somit wiederum von dessen Art ab. Je nach Verwendungszweck des so entstandenen erfindungsgemässen faseroptischen Wellenleiters lässt sich nun an dieses gebrochene Ende 14 eine zweite Faser 2 anspleissen. Im hier dargestellten Beispiel gemäss Figur 2c wird wiederum zur Erzeugung eines Wellenleiters für einen magnetooptischen Stromsensor eine Sensorfaser 2 mit rundem Kern angespleisst. Die Kerne K,K' der zwei Fasern sind in Figur 2d dargestellt.

Das erfindungsgemässe Verfahren erlaubt eine Feinkorrektur des Polarisationszustandes, welche sich bei allen Varianten des Verfahrens einsetzen lässt. Aufgrund von Toleranzen der optischen Faser 1 wie auch des Spleissgerätes ist es möglich, dass die Phasenverschiebung zwischen den beiden othogonalen Polarisationskomponenten des Phasenverschiebungssegmentes 12 vom gewünschten Wert abweicht. Das heisst im Beispiel mit dem λ/4-Verschiebungssegment, dass der Wert nicht 90° beträgt. Um eine Korrekturmöglichkeit zu haben, lässt sich nun die Länge des Phasenverschiebungssegmentes 12 und somit der Abstand L etwas länger wählen als ein theoretischer Sollwert, so dass die resultierende Phasenverschiebung ebenfalls grösser als 90° ist. Das Licht am Ausgang des Phasenverschiebungssegmentes 12 ist somit leicht elliptisch polarisiert. Die Doppelbrechung des Phasenverschiebungssegmentes 12 lässt sich nun durch gezieltes, gegebenenfalls mehrmaliges Aufheizen des Phasenverschiebungssegmentes 12 in kleinen Schritten erniedrigen, bis der Polarisationszustand am Ausgang des Segmentes innerhalb der gewünschten Toleranz liegt, das heisst hier zirkular ist. Die Erwärmung erfolgt wiederum vorzugsweise im Lichtbogen des Spleissgerätes. Die Erklärung dieses Prozesses ist wie folgt: Beim Aufheizen diffundieren Dotierungen aus dem elliptischen Faserkern in den Fasermantel. Der Sprung im Brechungsindex zwischen Kern und Mantel wird kleiner beziehungsweise verschmiert, was eine verringerte Doppelbrechung zur Folge hat.

In den obengenannten Verfahren wurden als Grundfasern polarisationserhaltende Fasern mit elliptischen Kernen eingesetzt. Das erfindungsgemässe Verfahren ist jedoch nicht auf derartige Fasern beschränkt, beispielsweise lässt es sich auch Fasern mit stress-induzierter Doppelbrechung anwenden.

Auch das Anbringen einer zweiten Faser an das Phasenverschiebungssegment ist nicht zwingend notwendig. Je nach Verwendungsart ist es auch sinnvoll, das der Entspannungszone abgewandte Ende des Phasenverschiebungssegmentes frei zu lassen, so dass sich die Welle anschliessend im Raum oder in einem anderen Material weiter ausbreitet.

### Bezugszeichenliste

- 1: erste Faser (Grundfaser)
- 11: Grundsegment
- 12: Phasenverschiebungssegment
- 13: Entspannungszone
- 14: Gebrochenes Ende

- 2: zweite Faser (Sensorfaser)
- 20: Faserende

- 3: Verbindungsstelle

- 4: eingespannter Abschnitt

- 5: erste Halterung
- 6: zweite Halterung

- 7: Elektroden des Spleissgerätes

- K: Kern der ersten Faser
- K': Kern der zweiten Faser
- P: Polarisationen
- L: Länge des Phasenverschiebungssegmentes
- d: Länge des eingespannten Abschnittes

## Patentansprüche

1. Verfahren zur Herstellung eines faseroptischen Wellenleiters mit einem Grundsegment (11) und einem faseroptischen Phasenverschiebungssegment (12), wobei das Grundsegment (11) und das Phasenverschiebungssegment (12) Faserkerne (K) derselben Form aufweisen, wobei die Faserkerne in einem definierten Winkel (α) zueinander ausgerichtet sind, und wobei das Phasenverschiebungssegment (12) über eine Verbindungsstelle (3) mit einer zweiten Faser (2) verbunden ist, wobei die zwei Fasern (12, 2) unterschiedliche Kerne (K, K') aufweisen,
**dadurch gekennzeichnet,**
**dass** zur Bildung des Grundsegmentes (11) und des faseroptischen Phasenverschiebungssegmentes (12) eine optische Faser (1) mit einem Faserkern (K) der obengenannten Form verwendet wird,
**dass** die optische Faser (1) mindestens annähernd um den obengenannten definierten Winkel (α) tordiert wird und in dieser Torsionslage fixiert gehalten wird,
**dass** eine Entspannungszone (13) innerhalb der tordierten Faser (1) erwärmt wird, bis sich innerhalb der Entspannungszone (13) die Torsion löst, dass die Fixierung der Torsionslage bis nach Erstarren der Entspannungszone (13) aufrechterhalten wird und
**dass** die Länge des Phasenverschiebungssegmentes (12) grösser als ein entsprechender theoretischer Sollwert gewählt wird, und das Phasenverschiebungssegment (12) erwärmt wird, bis seine Doppelbrechung einen gewünschten Wert erreicht hat.

2. Verfahren nach Anspruch 1, **dadurch gekennzeichnet, dass** die Doppelbrechung des Phasenverschiebungssegmentes (12) **dadurch** verringert wird, dass beim Aufheizen Dotierungen aus dem Faserkern (K) in den Fasermantel diffundieren.

3. Verfahren nach einem der vorangehenden Ansprüche, **dadurch gekennzeichnet, dass** die Doppelbrechung des Phasenverschiebungssegmentes (12) durch mehrmaliges Aufheizen des Phasenverschiebungssegmentes (12) in kleinen Schritten erniedrigt wird, bis der Polarisationszustand am Ausgang des Phasenverschiebungssegmentes (12) innerhalb der gewünschten Toleranz liegt.

4. Verfahren nach einem der vorangehenden Ansprüche, **dadurch gekennzeichnet, dass** die lokale Erwärmung zur Bildung der Entspannungszone (13) im Lichtbogen eines Spleissgeräts durchgeführt wird.

5. Verfahren nach einem der vorangehenden Ansprüche, **dadurch gekennzeichnet, dass** die Aufheizung des Phasenverschiebungssegmentes (12) im Lichtbogen eines Spleissgeräts durchgeführt wird.

6. Verfahren nach einem der Ansprüche 1-5, **dadurch gekennzeichnet, dass** die zweite Faser (2) nach dem Erstarren an das Phasenverschiebungssegment (12) angefügt wird.

7. Verfahren nach einem der Ansprüche 1-5, **dadurch gekennzeichnet, dass** der Wellenleiter zur Verwendung mit Licht einer vorgegebenen Wellenlänge vorgesehen ist, und dass die Länge des Phasenverschiebungssegmentes (12) als mindestens annähernd ein Achtel, ein Viertel oder die Hälfte oder als mindestens ein Vielfaches eines Achtels, eines Viertels oder der Hälfte einer Schwebungsslänge von orthogonalen Polarisationsmoden dieser Wellenlänge gewählt wird.

8. Verfahren nach einem der Ansprüche 1-5, **dadurch gekennzeichnet, dass** als Winkel (α) 45° gewählt wird.

9. Verfahren nach einem der Ansprüche 1-5, **dadurch gekennzeichnet,**
**dass** die optische Faser (1) vor der Torsion mit der zweiten Faser (2) verbunden wird,
**dass** beide Fasern (1,2) gemeinsam tordiert werden und
**dass** die optische Faser (1) in einem definierten Abstand (L) zur Verbindungsstelle erwärmt wird.

10. Verfahren nach Anspruch 9, **dadurch gekennzeichnet, dass** als optische Faser (1) eine Faser mit elliptischen Kern (K) und als zweite Faser (2) eine Faser mit rundem Kern (K') verwendet wird.

11. Verfahren nach einem der Ansprüche 1-5, **dadurch gekennzeichnet, dass** die optische Faser (1) nach Erstarren der Entspannungszone (13) in einem definierten Abstand (L) zur Enstpannungszone (13) gebrochen wird.

12. Verfahren nach Anspruch 11, **dadurch gekennzeichnet, dass** die optische Faser (1) an diesem gebrochenen Ende (14) mit einem Ende (20) der zweiten Faser (2) verbunden wird.

13. Faseroptischer Wellenleiter mit einem Grundsegment (11), einem an diesem angrenzenden verbundenen faseroptischen Phasenverschiebungssegment (12) und einer zweiten optischen Faser (2), welche an ein zweites Ende des Phasenverschiebungssegments (12) angrenzt, wobei Grundsegment (11) und Phasenverschiebungssegment (12) Faserkerne (K) derselben Form aufweisen, wobei die Faserkerne (K) in einem vorbestimmten Winkel (α) zueinander ausgerichtet sind, und wobei die zweite optische Faser (2) einen Faserkern mit einer anderen Form (K') aufweist, **dadurch gekennzeichnet, dass** das Phasenverschiebungssegment (12) und das Grundsegment (11) aus einer einstückigen optischen Faser (1) gefertigt sind, wobei zwischen ihnen eine Entspannungszone (13) vorhanden ist, welche einen Kern aufweist, der sich von den Kernen (K) des Grundsegmentes (11) und des Phasenverschiebungssegmentes (12) unterscheidet und
dass die Länge des Phasenverschiebungssegmentes (12) grösser als ein entsprechender theoretischer Sollwert gewählt ist und die Doppelbrechung des Phasenverschiebungssegments (12) durch Aufheizen des Phasenverschiebungssegmentes (12) auf einen gewünschten Wert erniedrigt ist.

14. Wellenleiter nach Anspruch 13, **dadurch gekennzeichnet, dass** die Doppelbrechung des Phasenverschiebungssegmentes (12) **dadurch** verringert ist, dass beim Aufheizen Dotierungen aus dem Faserkern (K) in den Fasermantel diffundiert sind.

15. Wellenleiter nach einem der Ansprüche 13-14, **dadurch gekennzeichnet, dass** das Phasenverschiebungssegment (12) an seinem von der Entspannungszone (13) abgewandten Ende mit einer zweiten Faser (2) mit einem anderen Kern (K') verbunden ist.

## Claims

1. Method for producing a fibreoptic waveguide with a basic segment (11) and a fibreoptic phase shift segment (12), the basic segment (11) and the phase shift segment (12) having fibre cores (K) of the same form, the fibre cores being aligned at a defined angle (α) to one another and the phase shift segment (12) being connected to a second fibre (2) via a joint (3), the two fibres (12, 2) having different cores (K, K'), **characterized in that** to form the basic segment (11) and the fibreoptic phase shift segment (12) an optical fibre (1) with a fibre core (K) of the abovenamed form is used,
**in that** the optical fibre (1) is twisted at least approximately by the abovenamed defined angle (α) and is held fixed in this torsional position,
**in that** a stress-relief zone (13) is heated inside the twisted fibre (1) until the torsion is released inside the stress-relief zone (13),
**in that** the fixing of the torsional position is maintained until after solidification of the stress-relief zone (13), and
**in that** the length of the phase shift segment (12) is selected to be larger than a corresponding theoretical desired value, and the phase shift segment (12) is heated until its birefringence has reached a desired value.

2. Method according to Claim 1, **characterized in that** the birefringence of the phase shift segment (12) is reduced by the fact that, upon heating, dopings diffuse from the fibre core (K) into the fibre cladding.

3. Method according to either of the preceding claims, **characterized in that** the birefringence of the phase shift segment (12) is reduced in small steps by repeatedly heating the phase shift segment (12) until the state of polarization at the output of the phase shift segment (12) is within the desired tolerance.

4. Method according to one of the preceding claims, **characterized in that** the local heating for forming the stress-relief zone (13) is carried out in the arc of a splicer.

5. Method according to one of the preceding claims, **characterized in that** the heating of the phase shift segment (12) is carried out in the arc of a splicer.

6. Method according to one of Claims 1 to 5, **characterized in that** the second fibre (2) is joined to the phase shift segment (12) after the solidification.

7. Method according to one of Claims 1 to 5, **characterized in that** the waveguide is provided for use with light of a prescribed wavelength, and **in that** the length of the phase shift segment (12) is selected as at least approximately an eighth, a quarter or half, or as at least a multiple of an eighth, a quarter or half a beat length of orthogonal polarization modes of this wavelength.

8. Method according to one of Claims 1 to 5, **characterized in that** 45° is selected as the angle (α).

9. Method according to one of Claims 1 to 5, **characterized in that** the optical fibre (1) is connected to the second fibre (2) before the torsion,
**in that** both fibres (1,2) are twisted jointly, and
**in that** the optical fibre (1) is heated at a defined distance (L) from the joint.

10. Method according to Claim 9, **characterized in that** a fibre with an elliptical core (K) is used as the optical fibre (1), and a fibre with a round core (K') is used as the second fibre (2).

11. Method according to one of Claims 1 to 5, **characterized in that** after solidification of the stress-relief zone (13) the optical fibre (1) is broken at a defined distance (L) from the stress-relief zone (13).

12. Method according to Claim 11, **characterized in that** at this broken end (14) the optical fibre (1) is connected to an end (20) of the second fibre (2).

13. Fibreoptic waveguide having a basic segment (11), a fibreoptic phase shift segment (12) connected in a fashion adjoining the latter, and a second optical fibre (2), which adjoins a second end of the phase shift segment (12), the basic segment (11) and phase shift segment (12) having fibre cores (K) of the same form, the fibre cores (K) being aligned at a predetermined angle (α) to one another, and the second optical fibre (2) having a fibre core of another form (K'), **characterized in that** the phase shift segment (12) and the basic segment (11) are produced from a single-piece optical fibre (1), there being present between them a stress-relief zone (13) which has a core which differs from the cores (K) of the basic segment (11) and the phase shift segment (12), and **in that** the length of the phase shift segment (12) is selected to be larger than a corresponding theoretical desired value, and the birefringence of the phase shift segment (12) is lowered by heating the phase shift segment (12) to a desired value.

14. Waveguide according to Claim 13, **characterized in that** the birefringence of the phase shift segment (12) is reduced by the fact that, upon heating, dopings are diffused from the fibre core (K) into the fibre cladding.

15. Waveguide according to one of Claims 13-14, **characterized in that** at its end averted from the stress-relief zone (13) the phase shift segment (12) is connected to a second fibre (2) having a different core (K').

## Revendications

1. Procédé de fabrication d'un guide d'onde à fibres optiques qui présente un segment de base (11) et un segment de déphasage (12) à fibres optiques, le segment de base (11) et le segment de déphasage (12) ayant des âmes (K) de même forme, les âmes des fibres étant orientées l'une par rapport à l'autre sous un angle défini (α), le segment de déphasage (12) étant relié à une deuxième fibre (2) par un emplacement de liaison (3), les deux fibres (12, 2) présentant des âmes (K, K') différentes,
**caractérisé en ce que**
pour former le segment de base (11) et le segment de déphasage (12) à fibres optiques, on utilise une fibre optique (1) qui présente une âme (K) qui a la forme mentionnée plus haut,
**en ce que** la fibre optique (1) est torsadée au moins approximativement sur l'angle défini (α) mentionné plus haut et est immobilisée dans cette position en torsion,
**en ce qu'**une zone de détente (13) située à l'intérieur de la fibre torsadée (1) est chauffée jusqu'à ce que la torsion se relâche dans la zone de détente (13),
**en ce que** la fixation de la position en torsion est maintenue après la solidification de la zone de détente (13) et
**en ce que** la longueur sélectionnée pour le segment de déphasage (12) est plus grande qu'une valeur de consigne théorique concernée, le segment de déphasage (12) étant chauffé jusqu'à ce que sa biréfringence ait atteint une valeur souhaitée.

2. Procédé selon la revendication 1, **caractérisé en ce que** la biréfringence du segment de déphasage (12) est diminuée par le fait que lors du chauffage, les éléments dopants diffusent de l'âme (K) de la fibre jusque dans l'enveloppe de la fibre.

3. Procédé selon l'une quelconque des revendications précédentes, **caractérisé en ce que** la biréfringence du segment de déphasage (12) est diminuée par petit pas par chauffage répété du segment de déphasage (12) jusqu'à ce que l'état de polarisation à la sortie du segment de déphasage (12) soit situé à l'intérieur des tolérances souhaitées.

4. Procédé selon l'une quelconque des revendications précédentes, **caractérisé en ce que** l'échauffement local destiné à former la zone de détente (13) est réalisé dans l'arc lumineux d'un appareil d'épissage.

5. Procédé selon l'une quelconque des revendications précédentes, **caractérisé en ce que** le chauffage du segment de déphasage (12) est réalisé dans l'arc lumineux d'un appareil d'épissage.

6. Procédé selon l'une quelconque des revendications 1 à 5, **caractérisé en ce que** la deuxième fibre (2) est assemblée au segment de déphasage (12) après sa solidification.

7. Procédé selon l'une quelconque des revendications 1 à 5, **caractérisé en ce que** le guide d'onde est destiné à être utilisé avec de la lumière d'une longueur d'onde prédéterminée et **en ce que** la longueur sélectionnée pour le segment de déphasage (12) est au moins approximativement le huitième, le quart ou la moitié ou au moins un multiple du huitième, du quart ou de la moitié de la longueur de battement des modes de polarisation orthogonale de cette longueur d'onde.

8. Procédé selon l'une quelconque des revendications 1 à 5, **caractérisé en ce que** l'angle (α) sélectionné est de 45°.

9. Procédé selon l'une quelconque des revendications 1 à 5, **caractérisé en ce que** la fibre optique (1) est reliée à la deuxième fibre (2) avant la torsion,
**en ce que** les deux fibres (1, 2) sont torsadées ensemble et
**en ce que** la fibre optique (1) est chauffée à une distance (L) définie par rapport à l'emplacement de liaison.

10. Procédé selon la revendication 9, **caractérisé en ce que** comme fibre optique (1), on utilise une fibre à âme elliptique (K) et comme deuxième fibre (2) une fibre à âme circulaire (K').

11. Procédé selon l'une quelconque des revendications 1 à 5, **caractérisé en ce que** la fibre optique (1) est découpée à une distance définie (L) par rapport à la zone de détente (13) après la solidification de la zone de détente (13).

12. Procédé selon la revendication 11, **caractérisé en ce qu'**à cette extrémité découpée (14), la fibre optique (1) est reliée à une extrémité (20) de la deuxième fibre (2).

13. Guide d'onde à fibres optiques qui présente un segment de base (11), un segment de déphasage (12) à fibres optiques adjacent au premier et relié à ce dernier et une deuxième fibre optique (2) qui est adjacente à une deuxième extrémité du segment de déphasage (12), le segment de base (11) et le segment de déphasage (12) ayant des âmes (K) de la même forme, les âmes (K) des fibres étant orientées l'une par rapport à l'autre sous un angle (α) prédéterminé et la deuxième fibre optique (2) présentant une âme d'une autre forme (K'), **caractérisé en ce que** le segment de déphasage (12) et le segment de base (11) sont réalisés à partir d'une fibre optique (1) d'un seul tenant, une zone de détente (13) dont l'âme est différente des âmes (K) du segment de base (11) et du segment de déphasage (12) étant prévue entre ces segments, et
**en ce que** la longueur sélectionnée pour le segment de déphasage (12) est supérieure à une valeur de consigne théorique correspondante, la biréfringence du segment de déphasage (12) étant abaissée à une valeur souhaitée par chauffage du segment de déphasage (12).

14. Guide d'onde selon la revendication 13, **caractérisé en ce que** la biréfringence du segment de déphasage (12) est diminuée par le fait que lors du chauffage, les éléments dopants diffusent depuis l'âme (K) de la fibre jusque dans l'enveloppe de la fibre.

15. Guide d'onde selon la revendication 13 ou 14, **caractérisé en ce que** le segment de déphasage (12) est relié à une deuxième fibre (2) qui présente une autre âme (K') à son extrémité non tournée vers la zone de détente (13).
